(19) Europäisches Patentamt
European Patent Office
Office européen des brevets

(11) Publication number: **0 565 868 A2**

(12) # EUROPEAN PATENT APPLICATION

(21) Application number: **93103955.6**

(22) Date of filing: **11.03.93**

(51) Int. Cl.[5]: **C08K 5/5333**, C08K 5/25, C08K 5/13

(30) Priority: **19.03.92 US 853676**
**19.03.92 US 854116**

(43) Date of publication of application:
**20.10.93 Bulletin 93/42**

(84) Designated Contracting States:
**BE DE FR GB IT SE**

(71) Applicant: **OUANTUM CHEMICAL CORPORATION**
**11500 Northlake Drive**
**Cincinnati, OH 45249(US)**

(72) Inventor: **Tonyali, Koksal**
**28 Dexter Park Blvd.**
**Cincinnati, Ohio(US)**

(74) Representative: **Patentanwälte Grünecker, Kinkeldey, Stockmair & Partner**
**Maximilianstrasse 58**
**D-80538 München (DE)**

(54) **Polyethylene insulation composition.**

(57) A polyolefin composition having improved oxidative stability is provided. the stabilized composition comprises an ethylene homopolymer or copolymer with a divalent metal-containing hindered phenolic antioxidant and metal deactivator having one or more hindered phenol groups linked to a hydrazo or oxamido group. The stabilized polyolefin composition is useful in the insulation of wire and cable and are characterized by increased resistance to oxidation. The composition also retains a high degree of oxidative stability upon exposure to water-blocking cable fillers. A preferred embodiment of the composition includes a third stabilizer of the compound pentaerythirtyl tetrakis [3(3',5'-di-t-butyl-4'hydroxyphenyl) propionate].

EP 0 565 868 A2

Field of the Invention: The present invention relates to an improved stabilized polyethylene composition useful as insulation for wire and cable applications. The polyethylene composition of the invention is stabilized by incorporating therein a metal-containing phenolic antioxidant and a metal deactivator having one or more hindered phenol moieties linked through a hydrazo or oxamido group. Optionally, a third antioxidant is included in the composition.

Background of the Invention: Polyethylene resins, especially high density polyethylene (HDPE), are widely used as primary insulation materials for wire and cable. They can be applied to the copper conductor as a solid or foamed coating. In one widely utilized embodiment, a foamed insulation is first applied to the copper wire and then coated with an application of a solid insulation material. Telephone "singles" are produced by extrusion coating 19, 22, 24 or 26 AWG copper wire with solid and/or foamed polyethylene. The insulation layer can be from about 2 up to about 13 mils thick.

For telecommunication cables, two appropriately colored singles are uniformly twisted into pairs in a way which insures that the electrical requirements are met. Up to 50 or more of these pairs are then bundled in a metallic or plastic sheath. Solid or foam-skin HDPE is commonly used as the covering material. The outer sheath or jacket provides mechanical protection for the conductors; however, significant deterioration of the insulation, which ultimately produces cracking and necessitates replacement of the cable, has been observed in certain installations. Environmental factors, primarily heat, light, oxygen and physical stress, are known to accelerate this deterioration. Stabilizers are incorporated into the polyethylene insulation material to inhibit deterioration caused by these factors.

It is known that a combination of a primary antioxidant of the phenolic type and a metal deactivator must be employed to adequately protect against oxidative degradation of polyolefin compositions which are used to insulate copper conductors. A combination of pentaerythrityl tetrakis [3(3',5'-di-t-butyl-4'-hydroxyphenyl)propionate] (Irganox ®1010) and N,N'-bis[3,(3',5'-di-t-butyl-4'-hydroxyphenyl) propionyl]hydrazine (Irganox® MD 1024) has been demonstrated to be very effective. A discussion of primary antioxidant/metal deactivator combinations can be found in Chapter 2 of the Plastics Additives Handbook, edited by R. Gächter and H. Müller, Hanser Publishers (1987), and in an article by G.D. Brown, International Wire and Cable Symposium Proceedings 1987, pp. 337-343.

A second type of degradation, referred to as "treeing," is also known and commonly occurs with polyolefin insulated wires and cables. This type of deterioration is caused by moisture. To prevent or minimize this problem, various water-blocking filling compounds are forced under pressure into the cable cores to fill the voids and interstices therein. The water-blocking filling compounds are usually hydrocarbons of a heavy oil or waxy constituency. While these cable fillers have generally proven to be effective water-blocks, they have a tendency to extract the stabilizer(s) and thus reduce oxidative stability of the insulation materials. Whereas the oxidative stability of the insulation may be initially adequate, after exposure to the water-blocking agent for a period of time, there is a significant decrease in the stabilizer protection which can lead to premature catastrophic failure.

In one study comparing the stability of solid and cellular polyethylene insulation with and without contact with petrolatum conducted by Gächter and Müller (see pages 85 and 86 of the above-identified text), it was shown that aging in the presence of petrolatum reduces the oxidative stability of solid polyethylene by 35 percent and of cellular polyethylene by 10-40 percent. The choice of stabilizer package, i.e., primary antioxidant and metal deactivator, to be used for an insulation composition is therefore even more critical where the insulated conductor is used in conjunction with a water-blocking cable filler. Brown, after evaluating numerous primary antioxidant/metal deactivator combinations, was unable to identify an effective primary antioxidant alternative to pentaerythrityl tetrakis [3(3',5'-di-t-butyl-4'-hydroxyphenyl)-propionate] which would provide good melt processing stabilization and improved performance after cable filler exposure.

It would be highly advantageous if improved stabilizer combinations were available which provided superior oxidative stability upon exposure to water blocking fillers. It would be even more advantageous if all of the components of the stabilizer package were readily available. These and other advantages are realized by the formulations of the present invention which will be described in more detail to follow.

## SUMMARY OF THE INVENTION

The present invention provides improved polyolefin compositions having superior oxidative stability and improved resistance to oxidative degradation upon exposure to water-blocking cable fillers. While these combinations are primarily useful to insulate wire and cable, they also find utility in other applications where improved resistance to oxidation is desired.

More specifically, the compositions of the invention comprise a blend of polyethylene with 0.01 to 2 phr metal-containing hindered phenolic antioxidant selected from the group consisting of divalent metal salts of phenolic monocarboxylic acids, divalent metal salts of phenolic dicarboxylic acids, and divalent metal salts of phenolic phosphonic acids or mixtures thereof; and 0.01 to 2 phr metal deactivator having one or more hindered phenolic moieties linked to a hydrazo or oxamido group and corresponding to the general formula

$$R'-\overset{O}{\overset{\|}{C}}-NHNH-\overset{O}{\overset{\|}{C}}-R''$$

or

$$R'-HN-\overset{O}{\overset{\|}{C}}-\overset{O}{\overset{\|}{C}}-NH-R''$$

where R' and R'' are hydrogen or a radical selected from the group consisting of

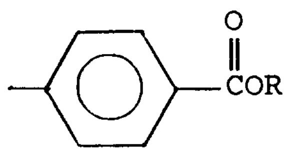

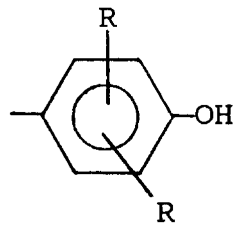

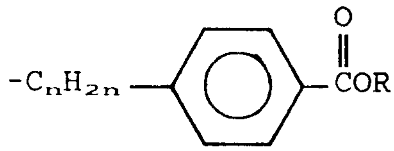

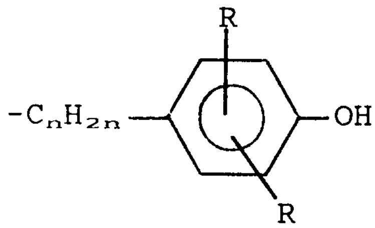

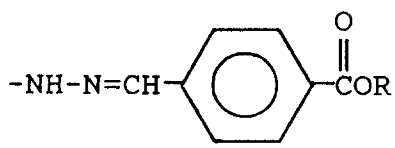

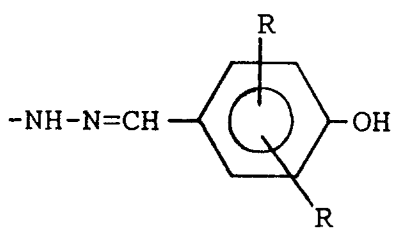

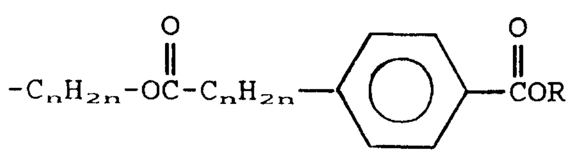

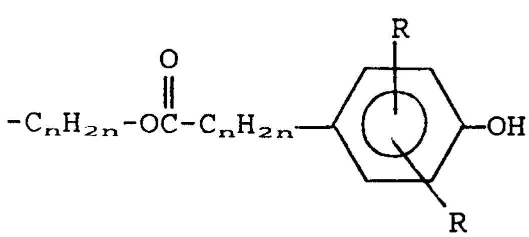

wherein R is a $C_{1-8}$ alkyl radical and n is an integer from 1 to 6; with the proviso that at least one of the substituents R' or R'' is a hindered phenolic moiety. Mixtures of two or more of the above-identified metal deactivators may also be used.

The divalent metal-containing hindered phenols will correspond to the general formula

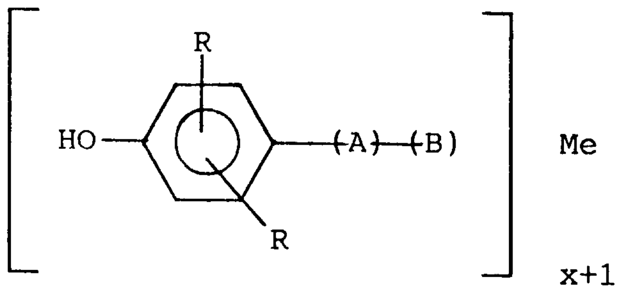

where Me represents the divalent metal Zn, Ni, Sn, Ba or Ca; R is an alkyl group having from 1 to 8 carbon atoms; x is 0 or 1; A is a bivalent radical selected from the group

$-C_nH_{2n}-$

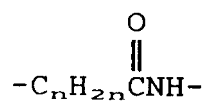

and

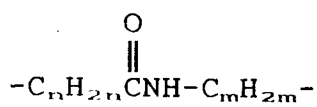

where n is an integer from 1 to 6 and m is an integer from 0 to 6; and B is a carboxylate or phosphonate group selected from

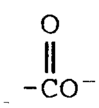

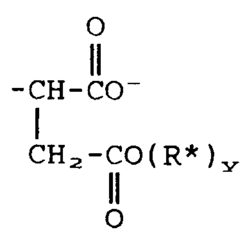

and

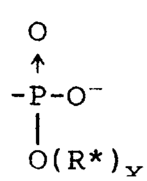

where R* is a $C_{1-8}$ alkyl group and y is 0 or 1.

The foregoing components are typically incorporated into polyolefin resins having densities from 0.92 to 0.96. Polyethylene resins having densities from 0.935 to 0.955 and melt indexes of 0.1 to 5 stabilized with combinations of the above-described hindered phenols provide especially useful wire and cable insulations.

In another preferred embodiment the polyolefin composition includes a third antioxidant, pentaerythrityl tetrakis [3(3'5'-di-t-butyl-4'-hydroxyphenyl) propionate], present in an amount of 0.01 to 2 phr.

## DETAILED DESCRIPTION OF THE INVENTION

The novel compositions of the present invention can be formulated using a wide variety of polyolefins suitable for insulation and jacketing applications. These include alphaolefin homopolymers and copolymers. The polymers are obtained by conventional polymerization methods known to the art. Primarily the compositions of the invention are formulated using polyethylene resins having densities in the range from about 0.92 up to about 0.96. As utilized herein, the term polyethylene is intended to encompass both ethylene homopolymers and copolymers of the ethylene with alpha-olefins having from 3 up to about 8 carbon atoms. Ethylene copolymers wherein the comonomer is propylene, butene-1, hexene-1, or octene-1 are especially advantageous and include linear low density polyethylene (LLDPE), medium and high density polyethylene (HDPE).

The polyethylene resins can have melt indexes ranging from about 0.01 up to about 30 or more; however, for wire and cable applications melt indexes generally range from about 0.1 up to about 5. In a particularly useful embodiment of this invention, medium or high density polyethylenes having densities ranging from about 0.935 up to about 0.955 and melt indexes of about 0.1 up to about 2 are employed. In another highly useful embodiment HDPE resins, obtained by copolymerizing ethylene with minor amounts of hexene-1, are stabilized in accordance with the invention.

The above-identified polyolefins are formulated with about 0.01 up to about 2 phr metal-containing hindered phenolic antioxidant and about 0.01 up to about 2 phr metal deactivator having one or more hindered phenolic moieties linked to a hydrazo or oxamido group. Other stabilizer components may be included if desired, as well as other conventional compounding additives such as fillers, reinforcing agents, flame retardants, processing aids, lubricants, colorants and the like may be included in the composition, if desired.

It has unexpectedly been discovered that by utilizing the above-described combination of stabilizer components polyolefin insulation compositions having significantly improved oxidative stability are obtained. Furthermore, the insulation compositions stabilized in accordance with the invention retain a greater degree of their original oxidative stability when aged in the presence of water-blocking fillers.

Metal-containing hindered phenolic antioxidants which can be used are selected from the group consisting of divalent metal salts of mono- or dicarboxylic acids and phosphonic acids which have a hindered phenol substituent. With the decarboxylic acids and phosphonic acids, metal salts of the corresponding half-esters may also be employed. In general, the divalent metal salts are salts of zinc, nickel, tin, barium, calcium or the like. Divalent metal salts of the above types are known stabilizer components for polypropylene. For example, the divalent metal salts of the mono- and dicarboxylic acids are described by Tochacek, et al., Polymer Degradation and Stability 27 (1990), pp 297-307. Divalent metal salts of phosphonic acids or half-esters thereof are disclosed in U.S. Patent Nos. 3,310,575 and 4,778,840.

The divalent metal-containing hindered phenolic antioxidants will conform to the general formula

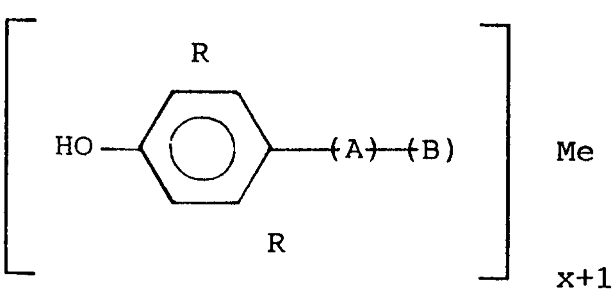

(I)

where Me represents the divalent metal Zn, Ni, Sn, Ba or Ca; R is an alkyl group having from 1 to 8 carbon atoms; x is 0 or 1; A is a bivalent radical selected from the group

$-C_nH_{2n}-$ (i)

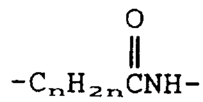 (ii)

and

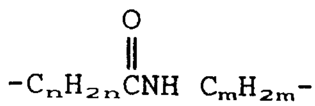 (iii)

where n is an integer from 1 to 6 and m is an integer from 0 to 6; and B is a carboxylate or phosphonate group selected from

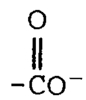 (iv)

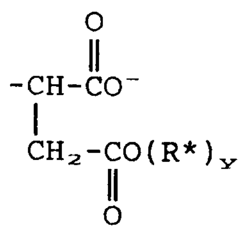 (V)

and

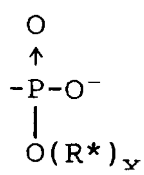 (vi)

where R* is a $C_{1-8}$ alkyl group and y is 0 or 1. Mixtures of two or more of the above-defined primary antioxidants can be employed if desired. Hindered phenols within the scope of Formula I will generally have at least one of the R groups adjacent to the hydroxyl substituent depending on the nature of the alkyl substituent. It is particularly advantageous to have both R groups adjacent to the hydroxyl group.

Especially useful divalent metal-containing primary antioxidants include compounds of the following formulas:

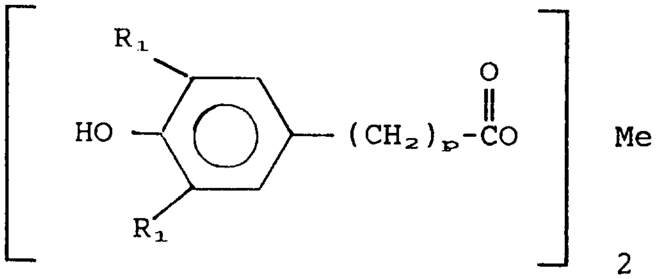

(II)

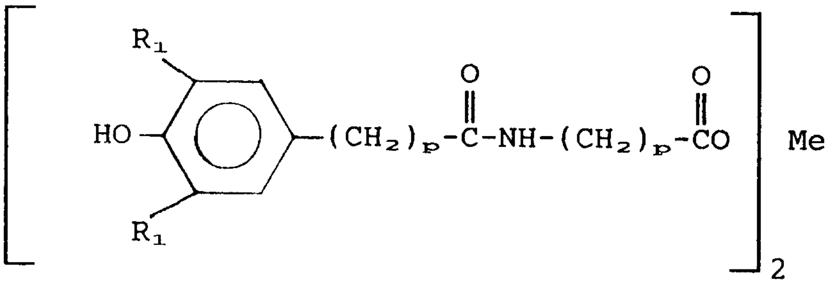

(III)

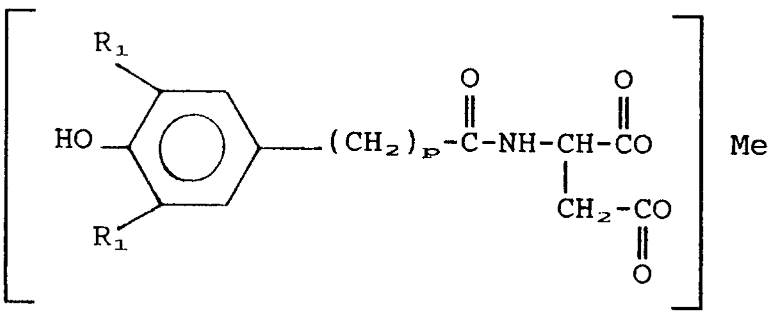

(IV)

and

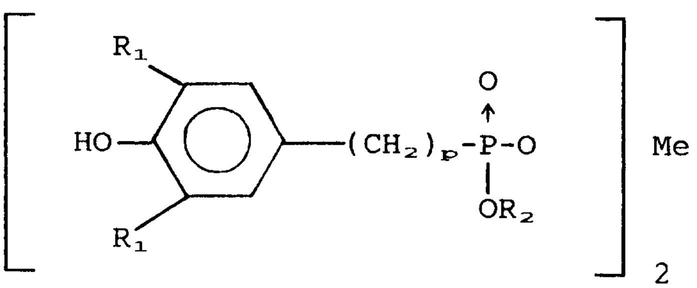

(V)

wherein Me is the same as previously defined, $R_1$ and $R_2$ are a $C_{1-4}$ alkyl group and p is an integer from 1 to 6. In a particularly useful embodiment $R_1$ is t-butyl, $R_2$ is ethyl, p is 1 or 2 and Me is calcium or zinc.

Illustrative compounds within the above definitions which have been found to be especially useful include: the calcium or zinc salt of 3-(3,5-di-t-butyl-4-hydroxyphenyl) propionic acid (corresponding to Formula II); the calcium or zinc salt of 6-[3-(3,5-di-t-butyl-4-hydroxyphenyl)propanamido]caproic acid (corresponding to Formula III); the calcium or zinc salt of 2-[3-(3,5-di-t-butyl-4-hydroxyphenyl) propanamido]succinic acid (corresponding to Formula IV); and the zinc or calcium salt of 3,5-di-t-butyl-4-hydroxybenzyl monoethyl phosphonic acid (corresponding to Formula V). This latter compound is commercially available from Ciba-Geigy Corporation and sold under the trademark Irganox® 1425 and is alternatively named calcium bis[monoethyl(3,5-di-tert-butyl-4-hydroxybenzyl)phosphonate] or calcium (2-) monoethyl[[3,5-bis(1.1-dimethylethyl)-4-hydroxyphenyl] methyl]-phosphonate.

A metal deactivator is necessarily employed in conjunction with the foregoing metal-containing primary antioxidants. Useful metal deactivators for the invention have one or more hindered phenol groups linked to a hydrazo (-NHNH-) or oxamido

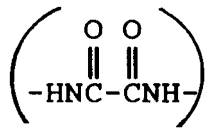

group. These metal deactivators will correspond to the general formula

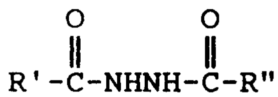

(VI)

or

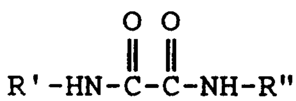

(VII)

where R' and R" are hydrogen or a radical selected from the group consisting of

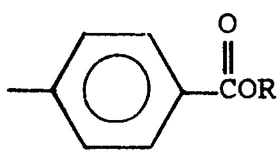

(vii)

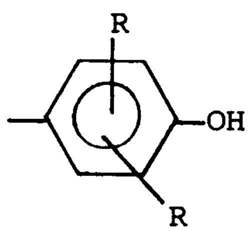

(viii)

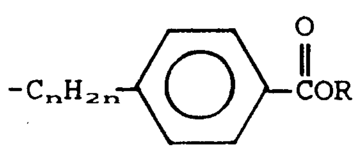

(ix)

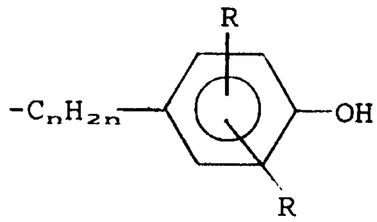

(x)

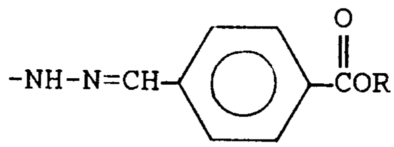

(xi)

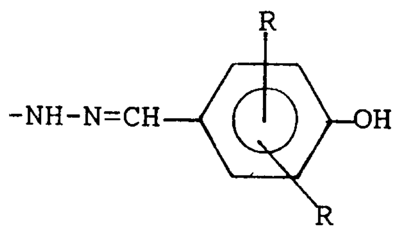

(xii)

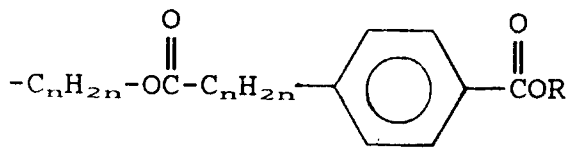

(xiii)

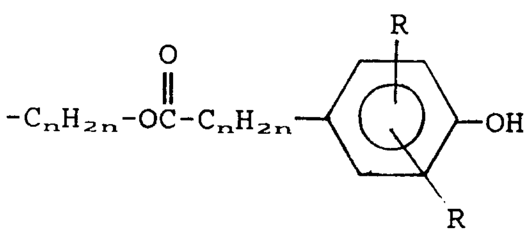

(xiv)

wherein R and n are the same as previously defined with the proviso that at least one of the substituents R' or R'' is a radical containing a hindered phenol group, i.e., corresponding to one of the formulas viii, x, xii or xiv. Compounds corresponding to Formula VI which can be employed for this invention are disclosed in U.S. Patent Nos. 3,660,438 and 3,773,722.

In one embodiment of the invention one or both of the ring alkyl substituents (R) are adjacent to the hydroxyl group. In another more preferred embodiment both R groups are adjacent to the hydroxyl substituent. It is advantageous if R is an alkyl radical containing from 1 to 4 carbon atoms and hindered phenolic metal deactivators wherein R is a t-butyl group are especially preferred. In a particularly useful embodiment of this invention, both R' and R'' are radicals containing a hindered phenolic group corresponding to formula viii, x, xii or xiv.

Specific metal deactivators of particular note falling within the above definitions include compounds with the following structures:

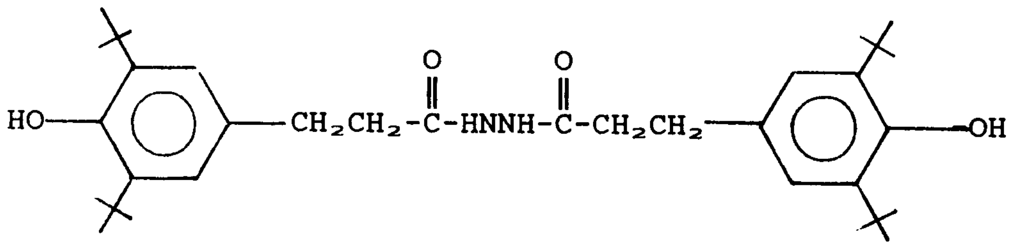

(VIII)

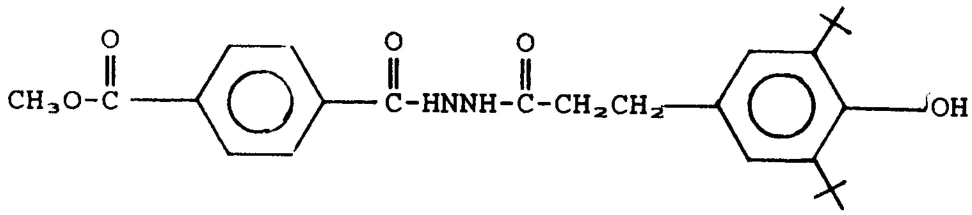

(IXa)

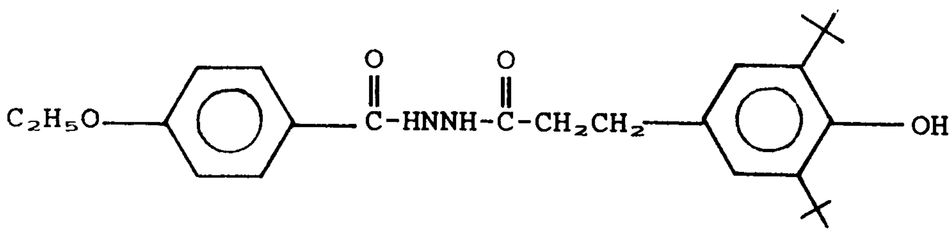

(IXb)

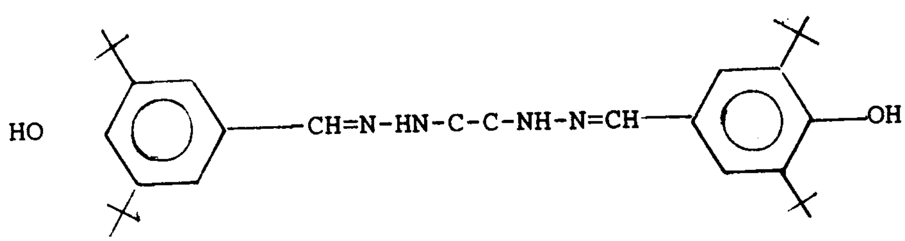

(X)

and

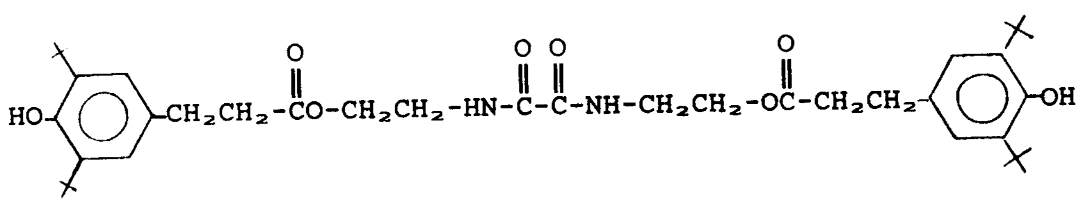

(XI)

The metal deactivator corresponding to Formula VIII is commercially available from Ciba-Geigy Corporation and sold under the trademark Irganox® MD 1024. This compound is named 1,2-bis(3,5-di-t-butyl-4-hydroxyhydrocinnamoyl)hydrazine or, alternatively, 3,5-bis (1,1-dimethylethyl)-4-hydroxybenzene propanoic acid 2-[3[3,5-bis-(1,1-dimethylethyl)-4-hydroxyphenyl]-1-oxopropyl]hydrazide or N,N'-bis[3',5'-di-t-butyl-4'-hydroxyphenyl)propionyl]hydrazide. The metal deactivator corresponding to Formula XI is available from Uniroyal Chemical Company, Inc. under the trademark Nauguard® XL-1. The chemical name of the compound is 2,2'-oxamido bis [ethyl-3-(3,5-di-t-butyl-4-hydroxyphenyl)propionate].

The combined amount of the primary antioxidant and metal deactivator will not generally exceed 5 phr. More commonly, the metal-containing hindered phenolic antioxidant will be used in amount from 0.01 to 2 phr with 0.01 to 2 phr metal deactivator. Most preferably, both the metal-containing hindered phenolic antioxidant and the metal deactivator are employed at 0.05 to 1.5 phr. While the weight ratio of the primary antioxidant to metal deactivator usually ranges from 2:1 to 1:2, it can extend from 10:1 to 1:10.

The polyolefin formulations of the invention can contain other additives conventionally employed in insulation or jacketing compositions, however, the combined amount of such additives generally will not exceed about 10 phr. Such additives are known in the art and are more typically present in amounts less than about 5 phr. Such additives include other antioxidants or metal deactivating agents, UV stabilizers, release agents, processing aids, nucleating agents, colorants, pigments, fillers, reinforcing agents, lubricants, and the like.

In another preferred embodiment of the polyolefin composition of the present invention an additional hindered phenolic stabilizer component is included. That hindered phenolic compound is pentaerythrityl tetrakis [3(3',5'-di-t-butyl-4'-hydroxyphenyl)propionate]. This compound has the structural formula

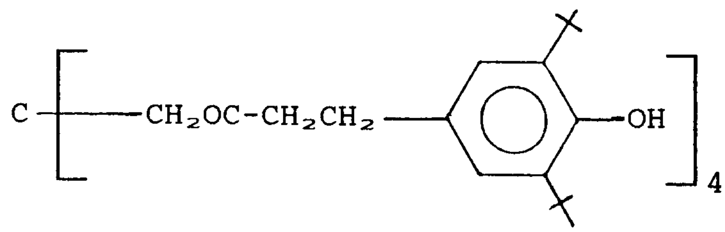

(XII)

In foregoing structural formula XII and in formulas VIII to XI hereinabove, the symbol "+" represents the tertiary butyl group. Pentaerythrityl tetrakis [3(3',5'-di-t-butyl-4'-hydroxyphenyl)propionate] is a commercial antioxidant and thermal stabilizer available from Ciba-Geigy Corporation under the trademark Irganox® 1010. The compound is sometimes alternatively named tetrakis [methylene(3,5-di-t-butyl-4-hydroxyhydrocinnamate)]methane.

The compositions of the invention may be produced in a number of ways provided that the primary antioxidant and metal deactivator (and other additives) are uniformly distributed throughout the polyolefin. The ingredients may be either dry blended or melt blended. The additives may be added directly to a polymer melt and dispersed therein using an internal mixer such as a Banbury, Farrel Continuous Mixer, or a single or twin screw extruder. Alternatively, the primary antioxidant and metal deactivator (and other additives) may be mixed into a suitable carrier resin or liquid, e.g., silicone oil, to form a masterbatch and this masterbatch then added to the polyolefin. Carrier resins may be the same or different than the polyolefin utilized for the insulation. If it is different, it must be compatible with the insulation resin. If the masterbatch technique is used, the masterbatch may comprise as much as 50 percent or more of the additives. Dry blending can be accomplished using a Henschel mixer or cone blender.

Whereas polymer compositions stabilized in accordance with this invention are primarily used as insulation for wire and cable, they may also be used for other applications. For example, they can be extruded into pipes and conduits for electrical and other applications. Powders of these resins may be applied as coatings to either interior or exterior metal surfaces utilizing conventional powder coating procedures. They can be effectively applied to interior surfaces of metal objects using so-called rotolining processes in which typical rotational molds are replaced by the metal part which requires lining. This technique is useful for lining hot water tanks, fuel tanks and the like.

The invention is further described and illustrated by the following examples which are not intended to be limiting. In these examples all parts and percentages are on a weight basis unless otherwise indicated.

The stabilized polyolefin compositions of the examples were evaluated using the oxidative induction time test (ASTM D-3895). This procedure utilizes thermal analysis to determine oxidative stability. The test determines the time for oxidative degradation to begin at 200 °C in pure oxygen. While the oxidative induction time (OIT) cannot be used to reliably forecast insulation lifetime, it does provide a rapid and convenient relative measure of the degree of stabilization of the material being tested. OIT tests were carried out using either pressed or extruded films. OIT results are reported in minutes.

To demonstrate the superior oxidative stability upon exposure to water-blocking cable fillers, some samples were first aged at 70 °C in cable filler for up to 28 days (0.5 gram sample per 8 gram cable filler) prior to OIT testing. Samples were removed at specified intervals (usually at 3, 7, 14, 21, and 28 days) and OIT values were determined. Samples aged in this manner were wiped clean to remove excess cable filler before testing.

EXAMPLE I

An ethylene-hexene-1 copolymer powder (density 0.947; melt index 0.7) was dry blended with 0.25 phr primary antioxidant (IRGANOX 1425) with 0.275 phr metal deactivator (NAUGUARD XL-1) for 5 minutes in a Henschel mixer. The resulting blend was then extruded at a rate of 20 lb/hr using a twin screw extruder (LEISTRITZ LSM 30.34; L/D 20) maintained at 222 °C and 250 rpm and pelletized using an underwater pelletizer. The extruded, pelletized, stabilized, polyethylene resin product had a melt index of 0.4. Film samples having a thickness of 5 mils were obtained by placing 10 grams of the pellets in a mold and pressing at 170 °C and 20,000 psi. The OIT value obtained for the film prepared in the above manner was 86.7 minutes. A sample of the polyethylene which contained to antioxidant or metal deactivator had an OIT of 0.5 minutes.

COMPARISON I

To demonstrate the significant improvement obtained when divalent metal-containing primary antioxidants are used in conjunction with a metal deactivator in accordance with the invention, the polyethylene resin of Example I was identically formulated except that the IRGANOX 1425 was replaced with IRGANOX 1010, a conventional hindered phenolic antioxidant which does not contain a divalent metal and which is generally recognized to be the industry standard for telecommunication cable insulation. The OIT of this sample was only 37.0 minutes -- less than half that obtained with the product of Example I.

EXAMPLE II

The polyethylene resin of Example I was dry blended with 0.20 phr IRGANOX 1425 and 0.20 phr metal deactivator and extruded to obtain pellets of the formulated product in the usual manner. The metal deactivator used for this example was IRGANOX MD 1024. The pellets were extruded into 20 mil thick film by extruding at 200 °C using a Brabender laboratory scale extruder equipped with a slit die. Film produced in this manner was then evaluated for oxidative stability using the OIT test. The OIT value obtained for the stabilized formulation was 80.3 minutes.

COMPARISON II

Stabilized polyethylene film samples were identically prepared as described in Example II except that the divalent metal-containing hindered phenolic antioxidant (IRGANOX 1425) was replaced with 0.20 phr IRGANOX 1010. The OIT of this sample was only 64.8 minutes.

EXAMPLE III

To demonstrate the ability to vary the ratio of the primary antioxidant and metal deactivator, Example II was repeated using 0.10 phr IRGANOX 1425 and 0.20 phr IRGANOX MD 1024. The OIT value, determined using 20 mil film, was 67.5 minutes. Comparing this result with that obtained for Comparison II, it is seen that comparable oxidative stability is obtained with half the amount of primary antioxidant when a divalent metal-containing hindered phenolic antioxidant is used in conjunction with the metal deactivator.

EXAMPLE IV

Stabilized formulations identical to those prepared in Example II were prepared and formed into 20 mil film. Film samples were aged at 70 °C in a white mineral oil (DRAKEOL 35) which is commonly used as a water blocking cable filler. OIT values obtained for the aged film samples after exposure to the cable filler were as follows:

| AGING PERIOD (DAYS) | OIT (minutes) |
|---|---|
| 3 | 55.4 |
| 7 | 50.1 |
| 14 | 43.4 |
| 21 | 32.2 |
| 28 | 24.8 |

COMPARISON IV

A formulation identical to that prepared in Example IV was prepared except that the IRGANOX 1425 was replaced with 0.20 phr IRGANOX 1010. OIT results obtained for the 20 mil film samples of this formulation aged at 70 °C in DRAKEOL 35 were as follows:

| AGING PERIOD (DAYS) | OIT (minutes) |
|---|---|
| 3 | 32.1 |
| 7 | 23.7 |
| 14 | 18.5 |
| 21 | 14.8 |
| 28 | 10.5 |

It is apparent from a comparison of the results reported in Example IV and Comparison IV that significant improvement in oxidative stability is obtained upon exposure to the cable filler compound when a divalent metal-containing hindered phenolic antioxidant, such as IRGANOX 1425, is used in conjunction with a metal deactivator.

EXAMPLE V

Formulations identical to those of Example III were aged at 70 °C in white mineral oil (DRAKEOL 35) and evaluated for oxidative stability. OIT values obtained for the aged samples were as follows:

| AGING PERIOD (DAYS) | OIT (minutes) |
|---|---|
| 3 | 43.2 |
| 7 | 38.6 |
| 14 | 32.8 |
| 21 | 26.0 |
| 28 | 20.5 |

EXAMPLE VI

A copolymer of ethylene and hexene-1 having a density of 0.943 and melt index of 1.1 was dry blended with 0.10 phr IRGANOX 1425 and 0.22 phr IRGANOX MD 1024. The dry blended material was then extruded and pelletized using a Brabender extruder equipped with a strand die. The pellets (melt index 0.65) were extruded into 20 mil thick film and evaluated for stability. The stabilized polyethylene had an OIT

value of 79.5 minutes. Samples of the film were also aged in PENRECO PE-PJ cable filler at 70 °C (0.3 gram film per 8 grams of filler). PE-PJ is a petroleum jelly having a typical viscosity of about 90 SUS at 130 °C. After aging for 28 days in the cable filler compound, the OIT was still a very acceptable 34.8 minutes.

EXAMPLE VII

To further demonstrate the improved results obtained with the stabilized products of the invention, two formulations (identified as products VIIA and VIIB) were prepared following the general procedure in Example II. The amount of the primary antioxidant and metal deactivator used are reported in Table I as are the stabilizer levels of a comparative formulation, identified as VII Comparison. Initial OIT values were determined for all of the products and film samples were then aged for 28 days at 70 °C in PENRECO FW Cable Filler, a commercially available non-petroleum based cable filler which remains flexible at subambient temperatures. OIT results are reported in the table.

It is apparent from the data that product VIIB, formulated in accordance with the invention, has improved initial oxidative stability compared to that of the prior art formulation. Furthermore, the retained oxidative stability after 28 days is much greater for VIIB than for VII Comparison. The results obtained for VIIA further illustrate that by replacing the prior art hindered phenol with a divalent metal-containing hindered phenol it is possible to use significantly less of the primary antioxidant without sacrificing oxidative stability.

TABLE I

| PRODUCT | VIIA | VIIB | VII COMP. |
|---|---|---|---|
| IRGANOX 1425 (phr) | 0.1 | 0.2 | --- |
| IRGANOX 1010 (phr) | --- | --- | 0.2 |
| IRGANOX MD 1024 (phr) | 0.20 | 0.20 | 0.20 |
| **OIT (minutes):** | | | |
| Initial | 70.6 | 85.8 | 66.6 |
| After 16 days aging | 22.9 | 39.5 | 13.7 |
| After 28 days aging | 19.3 | 30.4 | 11.8 |

EXAMPLE VIII

An ethylene-hexene-1 copolymer powder (density 0.947; melt index 0.7) was dry blended with 0.125 phr pentaerythrityl tetrakis [3(3',5'-di-t-butyl-4'-hydroxyphenyl)propionate] (IRGANOX 1010), 0.125 phr calcium bis [monoethyl(3,5-di-tert-butyl-4-hydroxybenzyl)phosphonate] (IRGANOX 1425), and 0.275 phr 2,2'-oxamido bis[ethyl-3-(3,5-di-t-butyl-4-hydroxyphenyl)propionate] (NAUGUARD XL-1). Dry blending was accomplished by mixing for 5 minutes in a Henschel mixer. The stabilized resin was then extruded at a rate of 20 lb/hr and pelletized using an underwater pelletizer. A LEISTRITZ LSM 30.34 (L/D 20) twin screw extruder operated at 222 °C and 250 rpm was used for the extrusion. The resulting polyethylene pellets had a melt index of 0.4. Film samples (5 mil) were molded at 170 °C and 20,000 psi using 10 grams of the pellets. The OIT value obtained for the pressed film was 88.7 minutes. A film sample of the polyethylene copolymer which contained no stabilizer had an OIT value of 0.5 minutes.

COMPARISON VIII

To demonstrate the improvement obtained with the three-component stabilizer systems of the invention, the ethylene copolymer was formulated utilizing only the IRGANOX 1010 (0.250 phr) and the NAUGUARD XL-1 (0.275 phr). The IRGANOX 1425 was omitted from this formulation. The composition was processed and films prepared as described in Example VIII. An OIT value of only 37.0 minutes was obtained for this comparative composition - less than half that obtained with the formulation of Example VIII. It is apparent that while the total amount of stabilizer used was the same as in Example VIII, the comparative composition which did not contain all three of the phenolic stabilizer components had significantly inferior oxidative stability.

EXAMPLE IX

To further demonstrate the superior oxidative stability of polyolefin resin compositions containing the antioxidant combinations of the invention, three formulations were prepared using the polyethylene copolymer resin of Example VIII. The first composition, identified as Product II, contained 0.10 phr IRGANOX 1010, 0.10 phr IRGANOX 1425 and 0.20 phr IRGANOX MD 1024 (1,2-bis(3,5-di-tert-butyl-4-hydroxyhydrocinnamoyl) hydrazine). The second composition, prepared for comparative purposes and identified as Comparative Product IIA, contained 0.20 phr IRGANOX 1425 and 0.20 phr IRGANOX MD 1024. Another comparative composition, prepared in accordance with the prior art teachings and identified as Comparative Product IIB, contained 0.20 phr IRGANOX 1010 and 0.20 phr IRGANOX MD 1024. All formulations were prepared using the procedure described in Example VIII by first dry blending the ingredients and then extruding and pelletizing. Extruded films were prepared from each of the pelletized products for OIT evaluation. Twenty mil films were produced using a Brabender laboratory extruder equipped with a slit die. Extrusions were carried out at 200 °C. In addition to determining the initial OIT value for each product, samples of each film were aged at 70 °C in mineral oil (DRAKEOL 35) which is commonly used as a component in water-blocking cable filler compositions. OIT values obtained for the unaged and aged film samples for each of the three compositions were as follows:

| | II | COMP IIA | COMP IIB |
|---|---|---|---|
| Initial OIT (unaged) | 120.3 | 85.8 | 66.6 |
| OIT after 3 days aging | 59.5 | 55.4 | 32.1 |
| OIT after 7 days aging | 43.5 | 50.1 | 23.7 |
| OIT after 14 days aging | 38.8 | 43.4 | 18.5 |
| OIT after 21 days aging | 29.4 | 32.2 | 14.8 |
| OIT after 28 days aging | 26.5 | 24.9 | 10.5 |

It is apparent from the above data that the oxidative stability of Comparative Product IIB, formulated using only IRGANOX 1010 and IRGANOX MD 1024 - an antioxidant combination which is generally recognized as the industry standard for telecommunication cable insulation - is markedly inferior to that obtained with the composition of the invention (Product II) even though the total amount of antioxidant used for each is the same. The OIT values obtained initially and after aging in the cable filler compound for Comparative Product IIB were consistently and significantly lower than the OIT values obtained for either Product II or Comparative Product IIA. While the oxidative stability of Comparative Product IIA upon aging was comparable to that of Product II, the initial OIT value was appreciably lower. Only when the mixture of the three specific hindered phenols was used was it possible to obtain both improved initial oxidative stability and improved oxidative stability after exposure to mineral oil.

EXAMPLE X

To demonstrate the ability to vary the amounts of the components, two compositions (XA and XB) were prepared and evaluated for oxidative stability following the procedure of Example IX. OIT determinations were made on the initial (unaged) products and after aging in DRAKEOL 35 white mineral oil. A compositional breakdown of each product and the OIT values obtained for each are tabulated below.

| | XA | XB |
|---|---|---|
| IRGANOX 1425 (phr) | 0.1 | 0.05 |
| IRGANOX 1010 (phr) | 0.2 | 0.2 |
| IRGANOX MD 1024 (phr) | 0.2 | 0.2 |
| Initial OIT (unaged) | 166.4 | 150.9 |
| OIT after 3 days aging | 89.1 | 76.3 |
| OIT after 7 days aging | 60.4 | 53 |
| OIT after 14 days aging | 47.3 | 41.1 |
| OIT after 21 days aging | 39.2 | 31.4 |
| OIT after 28 days aging | 31.5 | 26.1 |

The synergism obtained as a result of the use of combinations of IRGANOX 1010 and IRGANOX 1425 with the metal deactivator (IRGANOX MD 1024) is apparent when one compares the initial OIT value obtained for XA with that obtained for a comparative composition containing only IRGANOX 1010 (0.2 phr) with the metal deactivator (0.2 phr) or a comparative composition formulated with only IRGANOX 1425 (0.2 phr) and the metal deactivator (0.2 phr). OIT values obtained for the comparative compositions (unaged samples) were only 66.6 and 85.8 minutes, respectively. The value obtained for XA (166.4 minutes) is significantly higher than the sum of the results of the two comparative compositions even though the level of IRGANOX 1425 is only at a 0.1 phr. It would be expected that an even higher OIT value would be obtained for XA if the amount of IRGANOX 1425 were increased to 0.2 phr.

EXAMPLE XI

The ability to obtain enhanced oxidative stability when compositions of the invention are exposed to a commercial cable filling compound was also demonstrated. For this experiment, three stabilized compositions (identified as XIA, XIB and XIC) were aged at 70°C in PENRECO FW Cable Filler, a commercially available non-petroleum based cable filler which remains flexible at sub-ambient temperatures. Compositional details of the formulations as well as the OIT test results determined after 16 and 28 days aging were as follows.

| | XIA | XIB | XIC |
|---|---|---|---|
| IRGANOX 1425 (phr) | 0.05 | 0.1 | 0.1 |
| IRGANOX 1010 (phr) | 0.20 | 0.10 | 0.20 |
| IRGANOX MD 1024 (phr) | 0.20 | 0.20 | 0.20 |
| OIT after 16 days aging | 32.1 | 28.5 | 40.4 |
| OIT after 28 days aging | 30.0 | 27.4 | 31.0 |

For the purpose of comparison, a composition stabilized with 0.20 phr IRGANOX MD 1024 and 0.20 phr IRGANOX 1010 was also aged under identical conditions. The OIT values determined for this composition after 16 and 28 days were only 13.7 and 11.8 minutes, respectively.

EXAMPLE XII

A polyethylene resin obtained by copolymerizing ethylene with a minor amount of hexene-1 and having a density of 0.943 and melt index of 1.1 was dry blended with 0.10 phr IRGANOX 1010, 0.075 phr IRGANOX 1425 and 0.22 phr IRGANOX MD 1024. The dry blended material was then extruded and pelletized using a Brabender laboratory extruder equipped with a strand die. The pellets (melt index 0.65) were then extruded at 200°C using a Brabender extruder equipped with a slit die to obtain 20 mil thick film. The stabilized polyethylene copolymer film had an initial OIT of 115.1 minutes. Film samples were then

aged at 70 °C in PENRECO PE-PJ cable (a petroleum jelly having a typical viscosity of about 90 SUS at 130 °C). 0.3 Gram film was used per 8 grams of filling compound. After 28 days aging, the OIT was still a very acceptable 40 minutes.

EXAMPLE XIII

The following example was conducted to demonstrate the utility of the invention and the ability to insulate copper conductors with the stabilized compositions of the invention. For this experiment an ethylene-hexene-1 copolymer (density 0.943; melt index 0.7) was formulated with 0.10 phr IRGANOX 1010, 0.075 phr IRGANOX 1425 and 0.26 phr IRGANOX MD 1024. The resulting composition was extruded onto 19 AWG copper wire at 250 °C at a rate of 3000 ft/min. The extrusion line consisted of a wire pre-heater, an extruder (2.5 inch Davis standard; die size 61.2 mil; guider tip size 37.5 mil), water trough, and automatic dual take-up. The wall thickness of the insulation was 12 mils. A sample of the insulated wire was evaluated for oxidative stability and found to have an OIT value of 126.5 minutes.

## Claims

1. A polyolefin composition containing (a) 0.01 to 2 phr divalent metal-containing hindered phenolic compound of formula

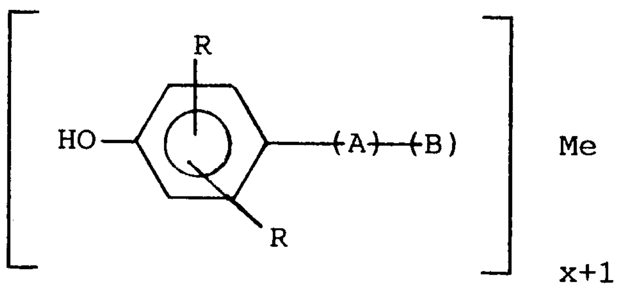

where Me represents the divalent metal Zn, Ni, Sn, Ba or Ca; R is an alkyl group having from 1 to 8 carbon atoms; x is 0 or 1; A is a bivalent radical selected from the group

$-C_nH_{2n}-$

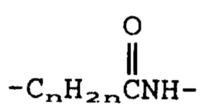

and

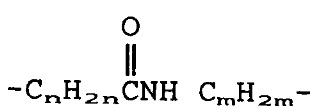

where n is an integer from 1 to 6 and m is an integer from 0 to 6; and B is a carboxylate or phosphonate group selected from

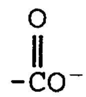

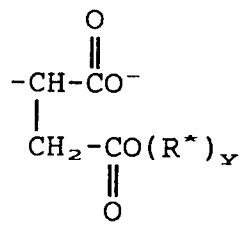

and

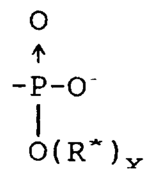

where R* is a $C_{1-8}$ alkyl group and y is 0 or 1; and (b) 0.01 to 2 phr metal deactivator having one or more hindered phenol groups linked to a hydrazo or oxamido group and corresponding to the formula

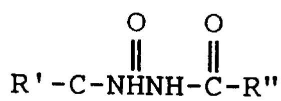

or

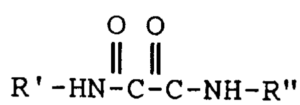

where R' and R" are hydrogen or a radical selected from the group consisting of

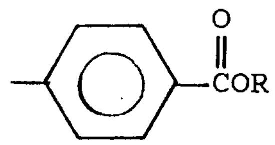

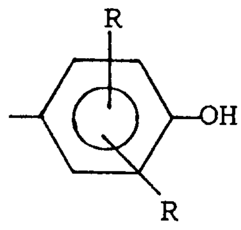

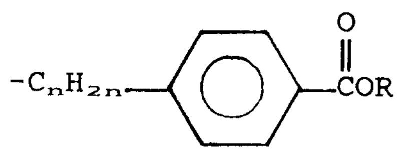

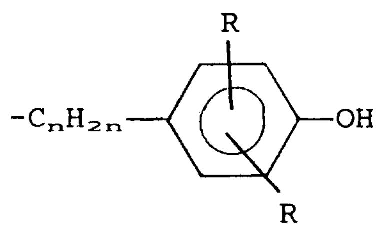

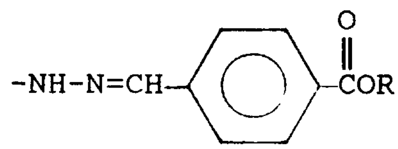

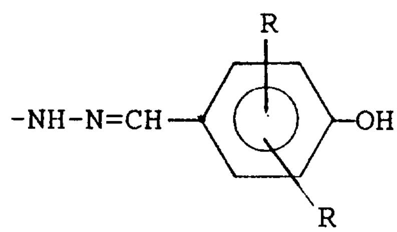

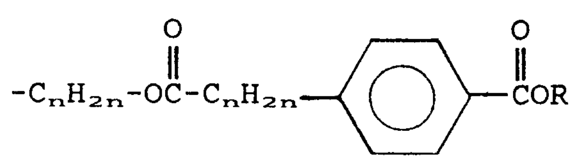

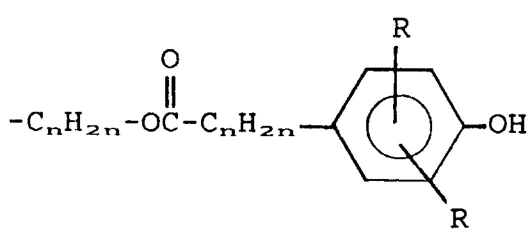

wherein R and n are the same as previously defined and with the proviso that at least one of the substituents R' or R'' is a radical containing a hindered phenol group.

2. The composition of claim 1 wherein the polyolefin is an ethylene homopolymer or a copolymer of ethylene and an $\alpha$-olefin having from 3 to 8 carbon atoms.

3. The composition of Claim 2 wherein the polyolefin has a density from 0.92 to 0.96 and melt index from 0.01 to 30.

4. The composition of Claim 3 wherein the polyolefin is a copolymer of ethylene with a minor amount of propylene, butene-1, hexene-1 or octene-1.

5. The composition of Claim 4 wherein the polyolefin has a density from 0.935 to 0.955 and melt index from 0.1 to 5.

6. The composition of Claim 5 wherein the polyolefin is a high density polyethylene having a melt index from 0.1 to 2.

7. The composition of Claim 6 wherein the polyolefin is a copolymer of ethylene with a minor amount of hexene-1.

8. The composition of Claim 1 wherein (a) is a compound of the formula

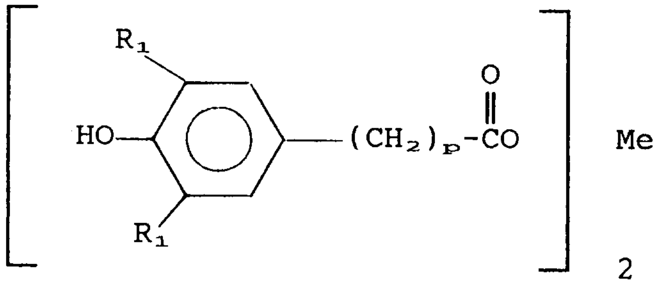

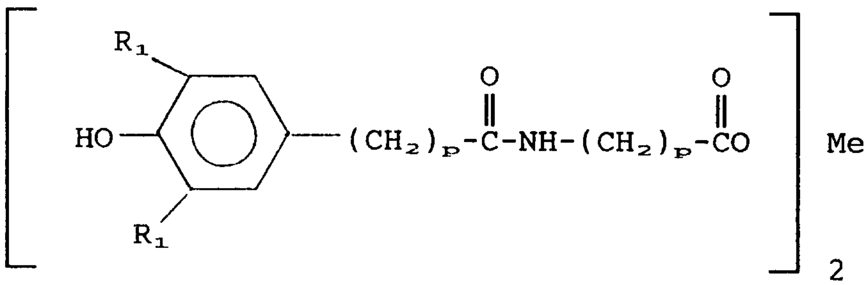

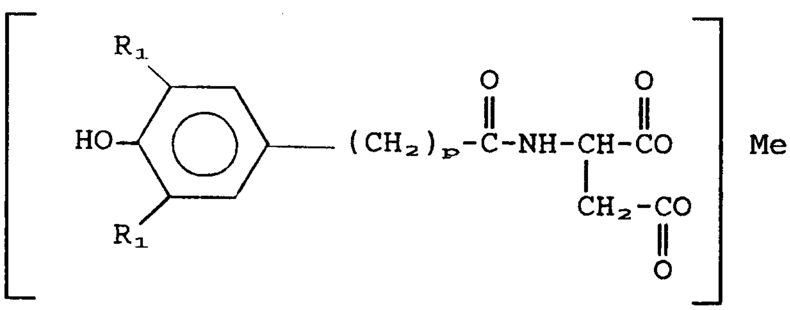

and

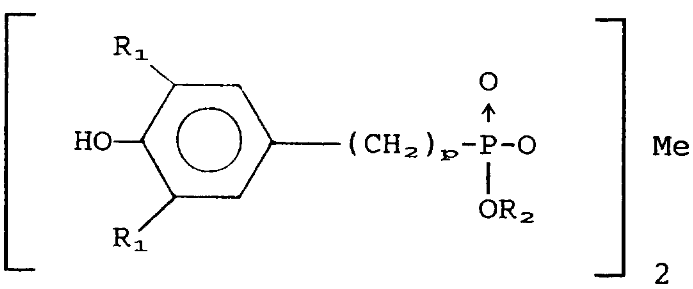

where Me is the same as previously defined, $R_1$ and $R_2$ are $C_{1-4}$ alkyl groups and p is an integer from 1 to 6 and the weight ratio of (a) to (b) is from 2:1 to 1:2.

9. The composition of Claim 8 wherein for (a) $R_1$ is t-butyl, $R_2$ is ethyl and p is 1 or 2 and for (b) R' and R'' are both hindered phenol groups where R is t-butyl.

10. The composition of Claim 9 wherein (a) is a calcium or zinc salt.

11. The composition of claim 10 wherein (a) corresponds to the formula

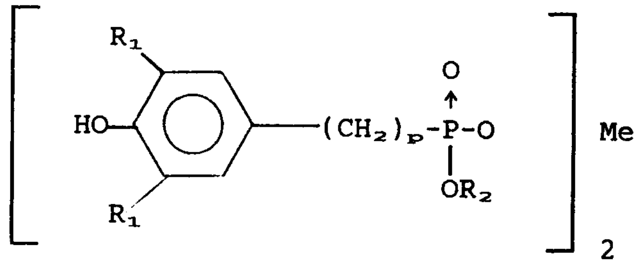

where Me is calcium, $R_1$ is t-butyl and $R_2$ is ethyl.

12. The composition of Claim 11 wherein (b) corresponds to the formula

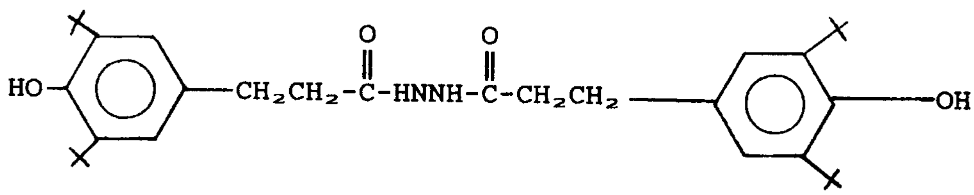

13. The composition of Claim 11 wherein (b) corresponds to the formula

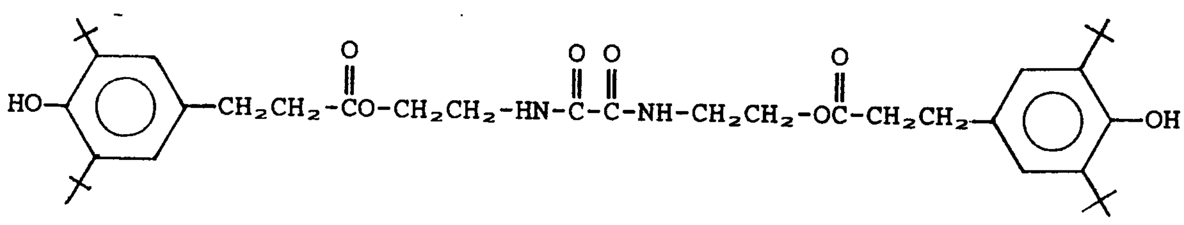

14. An insulated copper conductor wherein the insulation coating is a polyolefin composition as defined in Claim 1.

15. The insulated copper conductor of Claim 14 contacted with a water-blocking cable filler compound.

16. The insulated copper conductor of Claim 14 wherein the insulation comprises a polyolefin which is an ethylene homopolymer or copolymer of ethylene and a $C_{3-8}$ $\alpha$-olefin and having a density from 0.935 to 0.955 and melt index from 0.1 to 5, a divalent metal-containing hindered phenolic antioxidant of the formula

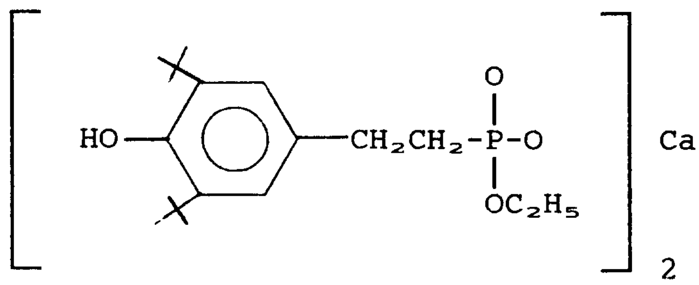

and a metal deactivator of the formula

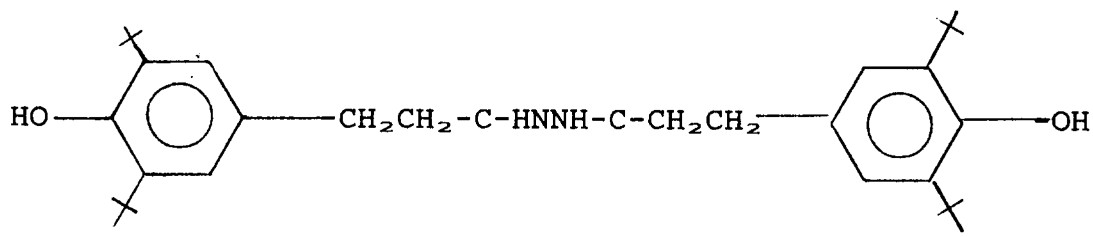

**17.** The insulated copper conductor of Claim 14 wherein the insulation comprises a polyolefin which is an ethylene homopolymer or copolymer of ethylene and a $C_{3-8}$ α-olefin and having a density from 0.935 to 0.955 and melt index from 0.1 to 5, a divalent metal-containing hindered phenolic antioxidant of the formula

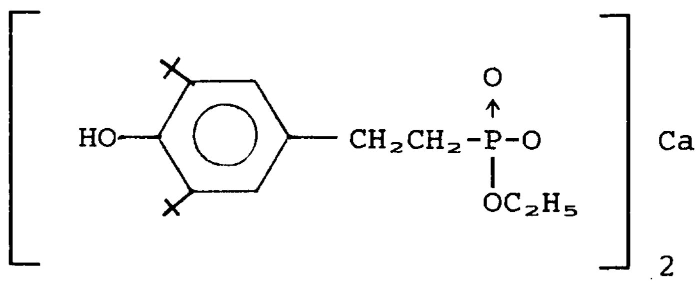

and a metal deactivator of the formula

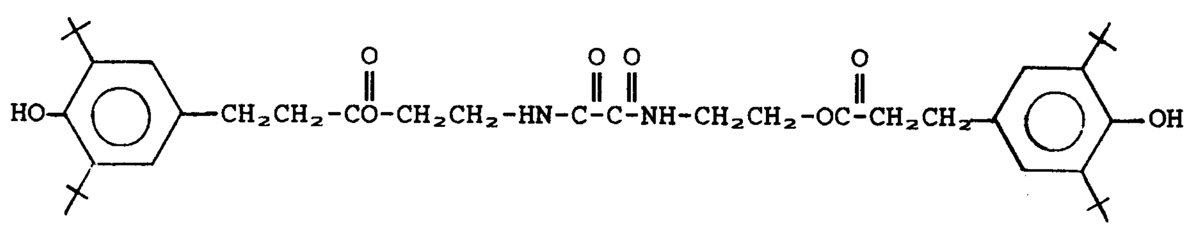

**18.** The composition of any one of Claims 1 to 17 containing (C) 0.01 to 2 phr pentaerythirtyl tetrakis [3-(3'5'-di-t-butyl-4'hydroxyphenyl) propionate].

**19.** The composition of claim 18 wherein the combined amount of (a), (b) and (c) is less than 5 phr.

**20.** The composition of Claim 19 wherein (a) is present in an amount of 0.05 to 1.5 phr, (b) is present in an amount of 0.05 to 1.5 phr and (c) is present in an amount of 0.05 to 1.5 phr.